# EUROPEAN PATENT APPLICATION

(11) **EP 4 618 357 A1**
(43) Date of publication of application: **17.09.2025**
(21) Application number: 23888338.3
(22) Date of filing: 13.09.2023
(51) Int. Cl.: H02J 7/00, H02J 50/12

(54) **POWER TRANSMISSION DEVICE**

(30) Priority: 08.11.2022 JP 2022178899
(71) Applicant: TOYOTA JIDOSHA KABUSHIKI KAISHA, Toyota-shi Aichi 471-8571 (JP); DENSO CORPORATION, Kariya-shi, Aichi 448-8661 (JP)
(72) Inventor: KIMURA, Kazutaka, Toyota-shi, Aichi 471-8571 (JP); HASHIMOTO, Toshiya, Toyota-shi, Aichi 471-8571 (JP); HASHIMOTO, Makoto, Toyota-shi, Aichi 471-8571 (JP); KANESAKI, Masaki, Kariya-shi, Aichi 448-8661 (JP); TANI, Keisuke, Kariya-shi, Aichi 448-8661 (JP); YAMAGUCHI, Nobuhisa, Kariya-shi, Aichi 448-8661 (JP); OBAYASHI, Kazuyoshi, Kariya-shi, Aichi 448-8661 (JP); TAKEMURA, Yuichi, Kariya-shi, Aichi 448-8661 (JP)
(74) Representative: D Young & Co LLP
(86) International application number: PCT/JP2023/033363
(87) International publication number: WO 2024/100983

(57) **Abstract**

A power transmission device includes: a coil 45 that performs power transmission or power reception in a wireless manner; a power supply device that is connected to the coil and applies a voltage to the coil; and a control device that controls the power supply device. When detecting an electric leakage of the power transmission device, the control device controls the power supply device to maintain both output terminals of the power supply device at the same potential different from a ground potential, and detects the electric leakage based on electrical characteristics of the power transmission device at this time.

## Description

### Technical Field

The present disclosure relates to a power transmission device.

### Background Art

There is known a ground power supply device including a coil for transmitting a power in a wireless manner and a power supply that supplies an AC power to the coil, the ground power supply device supplying the AC power from an AC power supply to the coil to transmit the power to a vehicle in a wireless manner (for example, JP 2019-526219 T).

### Summary of Invention

In the power transmission device such as the ground power supply device, an unintended electric leakage may occur in a resonance circuit including the coil, and thus it is necessary to detect the electric leakage.

In view of the above problems, an object of the present disclosure is to enable detection of an electric leakage in a resonance circuit of a power transmission device.

The gist of the present disclosure is as follows:
(1) A power transmission device comprising:
   a coil that performs power transmission or power reception in a wireless manner;
   a power supply device that is connected to the coil and applies a voltage to the coil; and
   a control device that controls the power supply device,
   wherein when detecting an electric leakage of the power transmission device, the control device controls the power supply device to maintain both output terminals of the power supply device at the same potential different from a ground potential, and detects the electric leakage based on electrical characteristics of the power transmission device at this time.
(2) The power transmission device according to above (1), wherein the electrical characteristics include a current flowing through the output terminal of the power supply device.
(3) The power transmission device according to above (1), further comprising a filter circuit provided between the coil and the power supply device, wherein the electrical characteristics include a current flowing between the filter circuit and the coil.
(4) The power transmission device according to above (2) or (3), wherein the control device determines that the electric leakage occurs in the power transmission device when it is detected that the current is not 0 while controlling the power supply device to maintain both the output terminals of the power supply device at the same potential different from the ground potential.
(5) The power transmission device according to any one of above (1) to (4), further comprising a filter circuit provided between the coil and the power supply device,
   wherein the filter circuit includes a plurality of capacitors,
   in one of the capacitors, while one end of the capacitor is connected to one end of the coil, the other end is grounded, and in the other one of the capacitors, while one end of the capacitor is connected to the other end of the coil, the other end is grounded, and
   the control device detects the electric leakage based on a rise speed of the current flowing through the output terminal of the power supply device when both the output terminals are set to the same potential different from the ground potential.
(6) The power transmission device according to any one of above (1) to (5), further comprising a resonance capacitor connected in series to the coil,
   wherein the electrical characteristics include the voltage between both ends of the resonance capacitor.
(7) The power transmission device according to above (6), wherein the control device determines that the electric leakage occurs in the power transmission device when it is detected that the voltage between both ends of the resonance capacitor is not 0 while controlling the power supply device to maintain both the output terminals of the power supply device at the same potential different from the ground potential.
(8) The power transmission device according to any one of above (1) to (7), further comprising:
   a resonance capacitor connected in series to the coil; and
   an electric resistor connected in parallel to the resonance capacitor,
   wherein the electrical characteristics include a current flowing through the electric resistor.
(9) The power transmission device according to above (8), wherein the control device determines that the electric leakage occurs in the power transmission device when it is detected that the current flowing through the electric resistor is not 0 while controlling the power supply device to maintain both the output terminals of the power supply device at the same potential different from the ground potential.
(10) The power transmission device according to any one of above (1) to (9), wherein when it is determined that the electric leakage occurs in the power transmission device, the control device notifies a user that the electric leakage occurs.
(11) The power transmission device according to any one of above (1) to (10), wherein
   the coil is a power transmission coil that performs power transmission in a wireless manner, and
   the control device controls the power supply device to supply an AC power to the power transmission coil when causing the power transmission coil to perform power transmission in a wireless manner.
(12) The power transmission device according to above (11), wherein the control device prohibits the supply of the power to the power transmission coil when it is determined that the electric leakage occurs in association with the power transmission coil constituting the power transmission device.
(13) The power transmission device according to above (11) or (12), comprising a plurality of the power transmission coils, wherein
   the plurality of power transmission coils are each connected to one power supply device via a changeover switch, and
   when the control device detects the electric leakage of the power transmission device, the control device controls the power supply device to maintain both the output terminals of the power supply device at the same potential different from the ground potential in a state where one changeover switch is turned on and a remaining changeover switch is turned off, and detects the electric leakage based on the electrical characteristics of the power transmission device at this time.
(14) The power transmission device according to any one of above (11) to (13), wherein when it is determined that the electric leakage occurs only in a state where one changeover switch is turned on and a remaining changeover switch is turned off, and it is not determined that the electric leakage occurs in a state where other changeover switches are each turned on and a remaining changeover switch is turned off, the control device determines that the electric leakage occurs in a resonance circuit including the power transmission coil connected to the one changeover switch.
(15) The power transmission device according to any one of above (1) to (10), wherein
   the coil is a power reception coil that performs power reception in a wireless manner,
   the power supply device is configured to be charged with a power received by the power reception coil, and
   when the control device causes the power reception coil to perform power reception in a wireless manner, the control device controls the power supply device to perform power charging after rectifying an AC power received into a DC power.

### Brief Description of Drawings

Fig. 1 is a diagram schematically illustrating a configuration of a wireless power supply system including a ground power supply device according to a first embodiment.
Fig. 2 is a diagram schematically illustrating a configuration of an electronic circuit in a power supply unit and a power transmission unit.
Fig. 3 is a diagram similar to Fig. 2, schematically illustrating the configuration of the electronic circuit in the power supply unit and the power transmission unit.
Fig. 4 is a diagram similar to Fig. 2, schematically illustrating the configuration of the electronic circuit in the power supply unit and the power transmission unit.
Fig. 5 is a diagram for explaining operations of the power supply unit and the power transmission unit at the time of power transmission.
Fig. 6 is a diagram schematically illustrating a state of the electronic circuit in a case where no electric leakage occurs in a power transmission-side resonance circuit.
Fig. 7 is a diagram schematically illustrating a state of the electronic circuit in a case where the electric leakage occurs in the power transmission-side resonance circuit.
Fig. 8 is a diagram illustrating a transition of a current detected by an ammeter.
Fig. 9 is a diagram similar to Fig. 2, schematically illustrating a configuration of an electronic circuit in the power supply unit and the power transmission unit in a case where a plurality of the power transmission-side resonance circuits are connected to one inverter circuit.
Fig. 10 is a diagram similar to Fig. 2, schematically illustrating a configuration of an electronic circuit in a power supply unit and a power transmission unit according to a second embodiment.
Fig. 11 is a diagram similar to Fig. 2, schematically illustrating a configuration of an electronic circuit in a power supply unit and a power transmission unit according to a third embodiment.
Fig. 12 is a diagram schematically illustrating a configuration of an electronic circuit in a power reception unit.
Fig. 13 is a diagram for explaining an operation of the power reception unit at the time of power reception.
Fig. 14 is a time chart of an input current to a power reception-side rectifier circuit, a state of a switching transistor, and an output current from the power reception-side rectifier circuit.
Fig. 15 is a diagram for explaining an operation of the power reception unit when the electric leakage in a power reception-side resonance circuit is detected.

### Description of Embodiments

Hereinafter, embodiments will be described in detail with reference to the drawings. In the following description, similar components are denoted by the same reference numerals.

### First Embodiment

### <Outline of wireless power supply system>

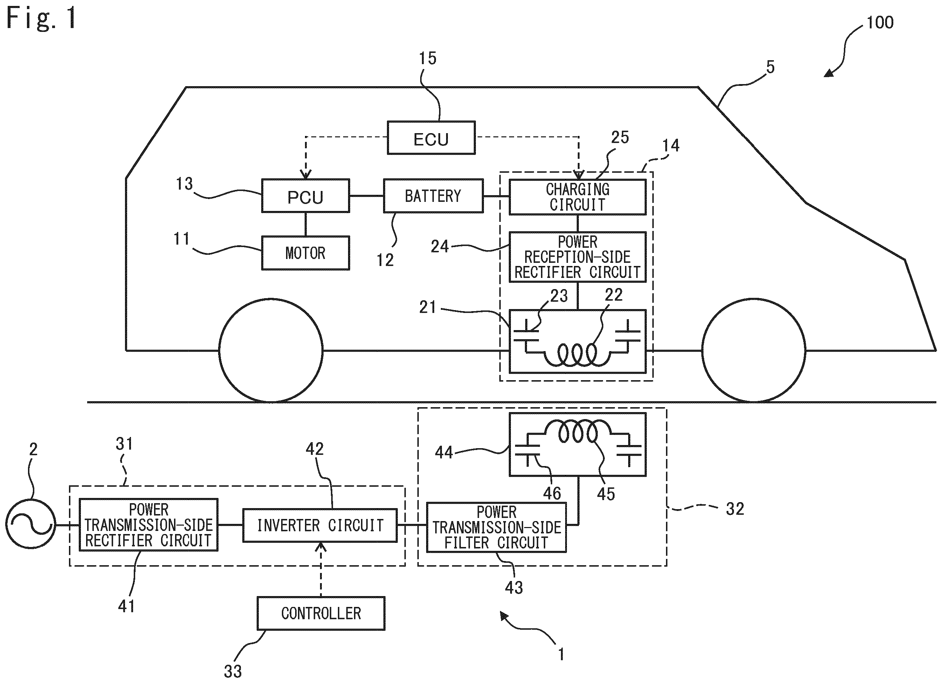

Fig. 1 is a diagram schematically illustrating a configuration of a wireless power supply system 100 including a ground power supply device 1 according to a first embodiment. The wireless power supply system 100 includes a ground power supply device 1 and a vehicle 5 capable of receiving a power from the ground power supply device 1. In the wireless power supply system 100, wireless power is transmitted by magnetic field resonance coupling (magnetic field resonance) from the ground power supply device 1 to the vehicle 5. Both of the ground power supply device 1 and the vehicle 5 function as a power transmission device which transmits electrical power in a wireless manner. In the present embodiment, the wireless power transmission is performed not only when the vehicle 5 is stopped but also while the vehicle 5 is traveling.

The ground power supply device 1 includes a power transmission unit 32 configured to transmit the power to the vehicle 5 in a wireless manner, and the vehicle 5 includes a power reception unit 14 configured to receive the power in a wireless manner. When the power is supplied to the power transmission unit 32 of the ground power supply device 1, a magnetic field is generated by the power transmission coil 45 of the power transmission unit 32. When the power reception coil 22 of the power reception unit 14 of the vehicle 5 is located on the power transmission coil 45, a current flows through the power reception coil 22 by the magnetic field generated by the power transmission coil 45, and thus, the power is received by the power reception unit 14.

### <Configuration of vehicle>

Next, a configuration of the vehicle 5 will be described with reference to Fig. 1. As illustrated in Fig. 1, the vehicle 5 includes a motor 11, a battery 12, a power control unit (PCU) 13, a power reception unit 14, and an electronic control unit (ECU) 15. The vehicle 5 is an electric vehicle (BEV) in which the motor 11 drives the vehicle 5, or a hybrid vehicle (HEV) in which an internal combustion engine, in addition to the motor 11, drives the vehicle 5.

The motor 11 is, for example, an AC synchronous motor, and functions as an electric motor and a generator. The motor 11 functions as an electric motor and is driven using the power stored in the battery 12 as a power source. The output of the motor 11 is transmitted to the wheel via a reduction gear and an axle.

The battery 12 is a rechargeable secondary battery, and includes, for example, a lithium ion battery, a nickel hydrogen battery, or the like. The battery 12 stores the power necessary for traveling of the vehicle 5 (for example, driving electric power of the motor 11). When the power received by the power reception unit 14 is supplied to the battery 12, the battery 12 is charged. When the battery 12 is charged, a charging rate (SOC: State of Charge) of the battery 12 is recovered. The battery 12 may also be chargeable by an external power source other than the ground power supply device 1 via a charging port provided in the vehicle 5.

The PCU 13 is electrically connected to the motor 11 and the battery 12. The PCU 13 includes an inverter, a boost converter, and a DC/DC converter. The inverter converts the DC power supplied from the battery 12 into the AC power, and supplies the AC power to the motor 11. The boost converter boosts the voltage of the battery 12 as necessary when the power stored in the battery 12 is supplied to the motor 11. The DC/DC converter steps down the voltage of the battery 12 when the power stored in the battery 12 is supplied to an electronic device such as a headlight.

The power reception unit 14 receives the power from the power transmission unit 32 and supplies the received power to the battery 12. The power reception unit 14 includes a power reception-side resonance circuit 21, a power reception-side rectifier circuit 24, and a charging circuit 25.

The power reception-side resonance circuit 21 is disposed at a bottom of the vehicle 5 so that a distance from the road surface is small. The power reception-side resonance circuit 21 includes the power reception coil 22 and a power reception-side resonance capacitor 23. The power reception coil 22 is configured such that a current flows through the power reception coil 22 when a magnetic field is generated around the power reception coil. The power reception coil 22 and the power reception-side resonance capacitor 23 constitute a resonator. Various parameters (the outer diameter and inner diameter of the power reception coil 22, the number of turns of the power reception coil 22, the electrostatic capacitance of the power reception-side resonance capacitor 23, and the like) of the power reception coil 22 and the power reception-side resonance capacitor 23 are determined such that the resonance frequency of the power reception-side resonance circuit 21 matches the resonance frequency of the power transmission-side resonance circuit 44. As long as a deviation amount between the resonance frequency of the power reception-side resonance circuit 21 and the resonance frequency of the power transmission-side resonance circuit 44 is small, for example, as long as the resonance frequency of the power reception-side resonance circuit 21 is within a range of ±10% of the resonance frequency of the power transmission-side resonance circuit 44, the resonance frequency of the power reception-side resonance circuit 21 does not necessarily coincide with the resonance frequency of the power transmission-side resonance circuit 44.

The power reception-side rectifier circuit 24 is electrically connected to the power reception-side resonance circuit 21 and the charging circuit 25. The power reception-side rectifier circuit 24 rectifies the AC power supplied from the power reception-side resonance circuit 21 to convert the AC power into the DC power, and supplies the DC power to the charging circuit 25. The power reception-side rectifier circuit 24 is, for example, an AC/DC converter.

The charging circuit 25 is electrically connected to the power reception-side rectifier circuit 24 and the battery 12. The charging circuit 25 converts the DC power supplied from the power reception-side rectifier circuit 24 into a voltage level of the battery 12, and supplies the DC power to the battery 12. When the power transmitted from the power transmission unit 32 is supplied to the battery 12 by the power reception unit 14, the battery 12 is charged. The charging circuit 25 is, for example, a DC/DC converter.

An ECU 15 performs various controls of the vehicle 5. For example, the ECU 15 is electrically connected to the charging circuit 25 of the power reception unit 14, and controls the charging circuit 25 to control charging of the battery 12 by the power transmitted from the power transmission unit 32. Furthermore, the ECU 15 is electrically connected to the PCU 13, and controls the PCU 13 to control exchange of the power between the battery 12 and the motor 11.

### <Configuration of ground power supply device>

Next, a configuration of the ground power supply device 1 will be schematically described with reference to Fig. 1. As illustrated in Fig. 1, the ground power supply device 1 includes a power source 2, a power supply unit 31, a power transmission unit 32, and a controller 33. In the present embodiment, one ground power supply device 1 includes, for example, a plurality of the power transmission coils 45 embedded, in a line, in a lane of a road.

The power source 2 supplies the power to the power transmission unit 32 via the power supply unit 31. The power source 2 is, for example, a commercial AC power supply that supplies single-layer AC power. The power source 2 may be another AC power source that supplies three-phase AC power, or may be a DC power source such as a fuel cell.

The power supply unit 31 converts AC power supplied from the power source 2 into a high-frequency AC power to be supplied to the power transmission unit 32. The power supply unit 31 includes a power transmission-side rectifier circuit 41 and an inverter circuit 42. In the power supply unit 31, the AC power supplied from the power source 2 is rectified in the power transmission-side rectifier circuit 41 and converted into a DC power, and this DC power is converted into the AC power in the inverter circuit 42. The power source 2 and the power supply unit 31 function as a power supply source that applies electrical voltage to the power transmission coil 45 connected to the power supply unit 31.

The power transmission-side rectifier circuit 41 is electrically connected to the power source 2 and the inverter circuit 42. The power transmission-side rectifier circuit 41 rectifies an AC power supplied from the power source 2 to convert the AC power into a DC power, and supplies the DC power to the inverter circuit 42. The power transmission-side rectifier circuit 41 is, for example, an AC/DC converter. In the present embodiment, one power supply unit 31 is provided with one power transmission-side rectifier circuit 41. When the power source 2 is the DC power source, the power supply unit 31 may be omitted.

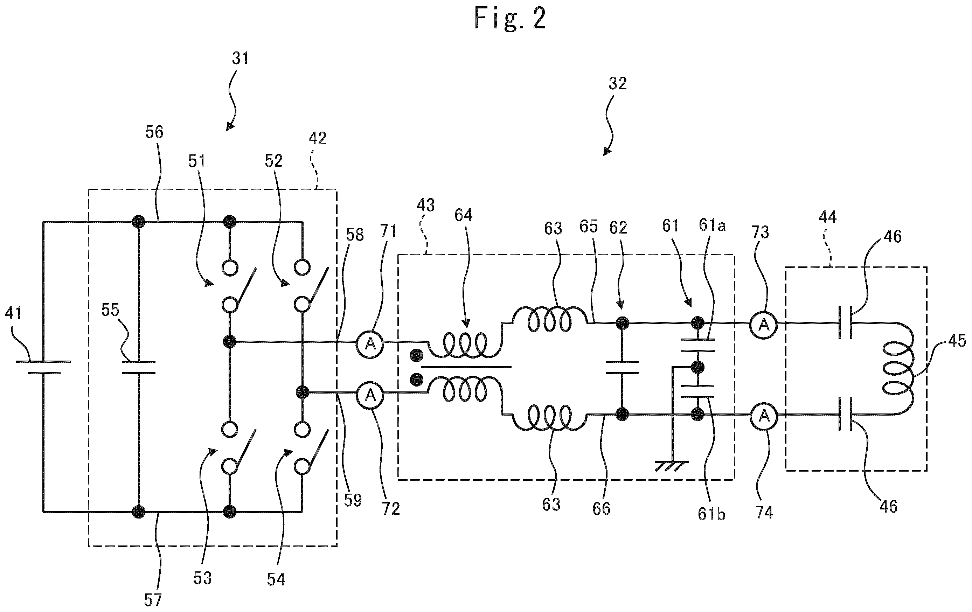

The inverter circuit 42 is electrically connected to the power transmission-side rectifier circuit 41 and the power transmission-side filter circuit 43. The inverter circuit 42 converts the DC power supplied from the power supply unit 31 into an AC power (high-frequency AC power) having a higher frequency than that of the AC power of the power source 2, and supplies the high-frequency AC power to the power transmission-side resonance circuit 44 via the power transmission-side filter circuit 43. In the present embodiment, the power supply unit 31 includes the inverter circuits 42 of the number which corresponds to the number of power transmission unit 32. Each of the inverter circuits 42 is connected to one of the corresponding power transmission unit 32 different from each other. A specific circuit configuration of the inverter circuit 42 will be described later with reference to Fig. 2.

The plurality of power transmission units 32 are provided in one ground power supply device 1. Therefore, the plurality of power transmission units 32 are connected to the power supply unit 31. Each of the power transmission units 32 includes the power transmission-side filter circuit 43 and the power transmission-side resonance circuit 44. When a high-frequency power is supplied from the power supply unit 31, the power transmission coil 45 of the power transmission unit 32 generates an alternating magnetic field. A specific circuit configuration of the power transmission unit 32 will be described later with reference to Fig. 2.

The power transmission-side filter circuit 43 removes noise generated in the power transmission unit 32, particularly normal mode noise and common mode noise. In the present embodiment, the power transmission-side filter circuit 43 is disposed between the inverter circuit 42 and the power transmission-side resonance circuit 44. However, instead of the power transmission-side filter circuit 43 or in addition to the power transmission-side filter circuit 43, the power transmission-side filter circuit may be disposed at another location such as between the power transmission-side rectifier circuit 41 and the inverter circuit 42.

The power transmission-side resonance circuit 44 includes the power transmission coil 45 and a power transmission-side resonance capacitor 46. The power transmission coil 45 generates a magnetic field in order to transmit electrical power in a wireless manner when the current flows therethrough. The power transmission coil 45 and the power transmission-side resonance capacitor 46 constitute a resonator. Various parameters (the outer shape and inner diameter of the power transmission coil 45, the number of turns of the power transmission coil 45, electrostatic capacitance of the power transmission-side resonance capacitor 46, and the like) of the power transmission coil 45 and the power transmission-side resonance capacitor 46 are determined such that a resonance frequency of the power transmission unit 32 becomes a predetermined set value. The predetermined set value is, for example, from 10 kHz to 100 GHz, and is preferably 85 kHz defined by the SAE TIR J2954 standard as a frequency band for wireless power transmission. In the present embodiment, all the power transmission-side resonance circuits 44 are configured such that various parameters of the power transmission coil 45 and the power transmission-side resonance capacitor 46 are the same. In other words, all the power transmission unit 32 has the same configuration.

The controller 33 is, for example, a general-purpose computer, and performs various controls of the ground power supply device 1. In particular, the controller 33 functions as a control device that controls a power supply device. For example, the controller 33 is electrically connected to the inverter circuit 42 of the power transmission unit 32, and controls the inverter circuit 42 to control power transmission by the power transmission unit 32. Specifically, for example, the controller 33 specifies the power transmission unit 32 on which the vehicle 5 is located based on an output from an arbitrary sensor (not illustrated), and controls the inverter circuit 42 to supply the power to the specified power transmission unit 32. The controller 33 includes a processor that executes various processes, and a memory that stores a program for the processor to execute various processes, various data used when the processor executes various processes, and the like.

The power transmission coil 45 and the power transmission-side resonance capacitor 46 of the power transmission unit 32 are embedded underground. In particular, the power transmission coil 45 is disposed such that its center is located at the center of a charging compartment. Alternatively, the power transmission coil 45 is disposed such that its center is located at the center of a lane. On the other hand, the power transmission-side filer circuit 43 of the power transmission unit 32 and the inverter circuit 42 of the power supply unit 31 may be embedded underground, or may be provided on the ground.

In the wireless power supply system 100 configured as described above, when the power reception coil 22 of the power reception-side resonance circuit 21 of the vehicle 5 faces the power transmission coil 45 of the power transmission-side resonance circuit 44 of the ground power supply device 1 as illustrated in Fig. 1, the AC power is supplied to the power transmission-side resonance circuit 44, and the alternating magnetic field is generated by the power transmission coil 45. When the alternating magnetic field is generated in this way, oscillation of the alternating magnetic field is transmitted to the power reception coil 22. As a result, an induced current flows in the power reception coil 22 by electromagnetic induction, and an induced electromotive force is generated in the power reception-side resonance circuit 21 by the induced current. That is, the power is transmitted from the power transmission unit 32 including the power transmission-side resonance circuit 44 to the power reception unit 14 including the power reception-side resonance circuit 21.

### <Description of electronic circuit>

Next, an electronic circuit in the power supply unit 31 and the power transmission unit 32 will be described with reference to Fig. 2. Fig. 2 is a diagram schematically illustrating configurations of the electronic circuit in the power supply unit 31 and the power transmission unit 32. As described above, the power supply unit 31 includes the inverter circuit 42, and the power transmission unit 32 includes the power transmission-side filter circuit 43 and the power transmission-side resonance circuit 44.

As illustrated in Fig. 2, the inverter circuit 42 includes four switching transistors 51 to 54, and a smoothing capacitor 55. The four switching transistors 51 to 54 constitute an H-bridge circuit. The first switching transistor 51 and the third switching transistor 53 are connected in series, and the second switching transistor 52 and the fourth switching transistor 54 are connected in series. Two sets of the switching transistors 51 to 54 connected in series are connected to a positive electrode line 56 connected to a positive electrode of the power supply unit 31 and a negative electrode line 57 connected to a negative electrode of the power transmission supply unit 31.

Specifically, the first switching transistor 51 and the second switching transistor 52 is connected to the positive electrode line 56. On the other hand, the third switching transistor 53 and the fourth switching transistor 54 is connected to the negative electrode line 57. A portion between the first switching transistor 51 and the second switching transistor 52 is connected to a first output terminal 58 of the inverter circuit 42 (that is, a first output terminal of the power supply device). On the other hand, a portion between the third switching transistor 53 and the fourth switching transistor 54 is connected to a second output terminal 59 of the inverter circuit 42 (that is, a second output terminal of the power supply device). Therefore, the first switching transistor 51 is provided between the positive electrode line 56 and the first output terminal 58, and the second switching transistor 52 is provided between the positive electrode line 56 and the second output terminal 59. The third switching transistor 53 is provided between the negative electrode line 57 and the first output terminal 58, and the fourth switching transistor 54 is provided between the negative electrode line 57 and the second output terminal 59. These switching transistors 51 to 54 are connected to the controller 33, and controlled to be turned on and off by the controller 33.

The smoothing capacitor 55 is provided between the positive electrode line 56 and the negative electrode line 57. The smoothing capacitor 55 is used to smooth the current rectified in the power transmission-side rectifier circuit of the power supply unit 31.

As described above, the power transmission-side filter circuit may be provided between the inverter circuit 42 and the power transmission-side rectifier circuit 41. Specifically, an X capacitor, a Y capacitor, a common mode choke coil, and the like disposed between the positive electrode line 56 and the negative electrode line 57 may be provided between the inverter circuit 42 and the power transmission-side rectifier circuit 41. These power transmission-side filter circuits can reduce normal mode noise and common mode noise generated in the power supply unit 31 and the power transmission unit 32. The power transmission-side filter circuit 43 may not be provided.

As illustrated in Fig. 2, the power transmission-side filter circuit 43 includes various filter elements for reducing noise. Specifically, in the present embodiment, the power transmission-side filter circuit 43 includes a Y capacitor 61, an X capacitor 62, a normal mode choke coil 63, and a common mode choke coil 64.

The Y capacitor 61 includes a first capacitor 61a and a second capacitor 61b connected in series. The first capacitor 61a is connected to a first line 65 connected to the first output terminal 58 of the inverter circuit 42. Similarly, the second capacitor 61b is connected to a second line 66 connected to the second output terminal 59 of the inverter circuit 42. The first capacitor 61a and the second capacitor 61b are grounded. Therefore, one end of the first capacitor 61a is connected to the first line 65, and the other end is grounded. One end of the second capacitor 61b is connected to the second line 66, and the other end is grounded. The Y capacitor 61 can reduce the common mode noise generated in the power transmission unit 32.

The X capacitor 62 is a capacitor provided between the first line 65 and the second line 66. The X capacitor 62 can reduce the normal mode noise generated in the power transmission unit 32. The normal mode choke coil 63 is a coil connected in series to the first line 65 and the second line 66. The normal mode choke coil 63 can reduce the normal mode noise generated in the power transmission unit 32. The common mode choke coil 64 is a filter element having a structure in which a conductive wire connected in series to the first line 65 and a conductive wire connected in series to the second line 66 are wound around one core material. The common mode choke coil 64 can reduce the common mode noise.

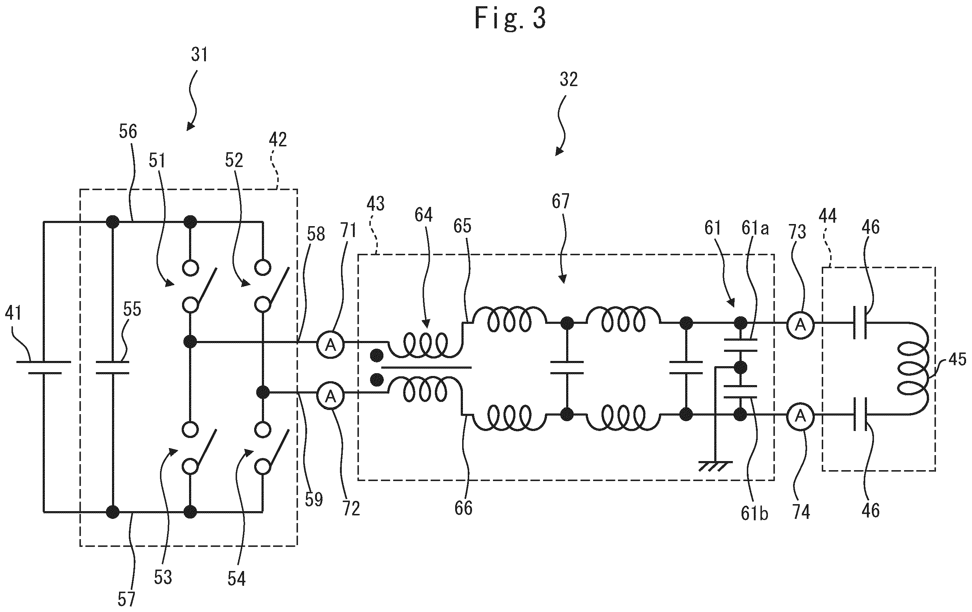

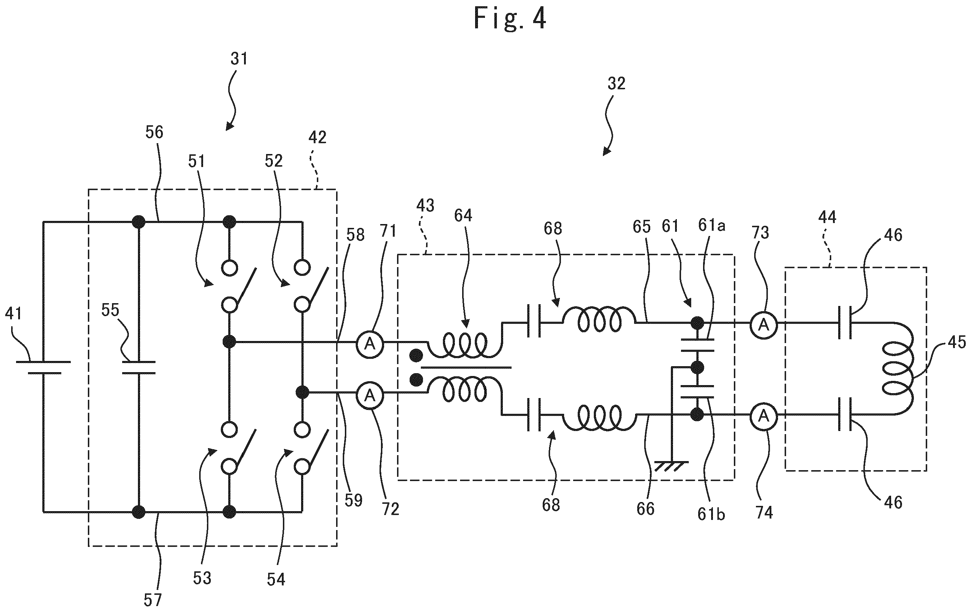

In the present embodiment, the power transmission-side filter circuit 43 includes the Y capacitor 61, the X capacitor 62, the normal mode choke coil 63, and the common mode choke coil 64. However, as long as some of the filter elements are included, all the filter elements may not be included. The power transmission-side filter circuit 43 may include other filter elements such as a filter element capable of returning a common mode current. In addition, the filter element may include a fourth order filter 67 as illustrated in Fig. 3 or a band pass filter 68 as illustrated in Fig. 4.

As described above, the power transmission-side resonance circuit 44 includes the power transmission coil 45 and the power transmission-side resonance capacitor 46. One end of the power transmission coil 45 is connected to the first line 65, and the other end is connected to the second line 66. Therefore, the first output terminal 58 and the first capacitor 61a of the inverter circuit 42 are connected to one end of the power transmission coil 45. On the other hand, the second output terminal 59 and the second capacitor 61b of the inverter circuit 42 are connected to the other end of the power transmission coil 45. In the present embodiment, the two power transmission-side resonance capacitors 46 are connected in series to the first line 65 and the second line 66, respectively. The power transmission-side resonance capacitor 46 may be provided in any form as long as it constitutes a resonator together with the power transmission coil 45. Therefore, the power transmission-side resonance capacitor 46 may be connected in series to only one of the first line 65 and the second line 66, or may be connected in parallel to the power transmission coil 45 between the first line 65 and the second line 66.

In the present embodiment, a plurality of ammeters 71 to 74 are provided in the power transmission unit 32. Specifically, the first ammeter 71 is provided in the first line 65 close to the first output terminal 58 of the inverter circuit 42. The first ammeter 71 detects a current flowing through the first output terminal 58 of the inverter circuit 42. The second ammeter 72 is provided in the second line 66 close to the second output terminal 59 of the inverter circuit 42. The second ammeter 72 detects a current flowing through the second output terminal 59 of the inverter circuit 42. These ammeter may be disposed at a location other than the above-described location, such as the positive electrode line 56 or the negative electrode line 57, as long as the ammeter can detect the current flowing through the first output terminal 58 or the second output terminal 59 of the inverter circuit 42.

In addition, the third ammeter 73 is provided in the first line 65 between the power transmission-side filter circuit 43 and the power transmission-side resonance circuit 44. The third ammeter 73 detects the current flowing from the power transmission-side filter circuit 43 to the power transmission coil 45 through the first line 65. The fourth ammeter 74 is provided in the second line 66 between the power transmission-side filter circuit 43 and the power transmission-side resonance circuit 44. The fourth ammeter 74 detects the current flowing from the power transmission-side filter circuit 43 to the power transmission coil 45 through the second line 66. These ammeters may be arranged at locations other than the location described above as long as the ammeter can detect the current flowing through the power transmission coil 45, the current flowing through the power transmission-side resonance capacitor 46, or the current flowing from the power transmission-side filter circuit 43 to the power transmission coil 45.

### <Operation during power transmission>

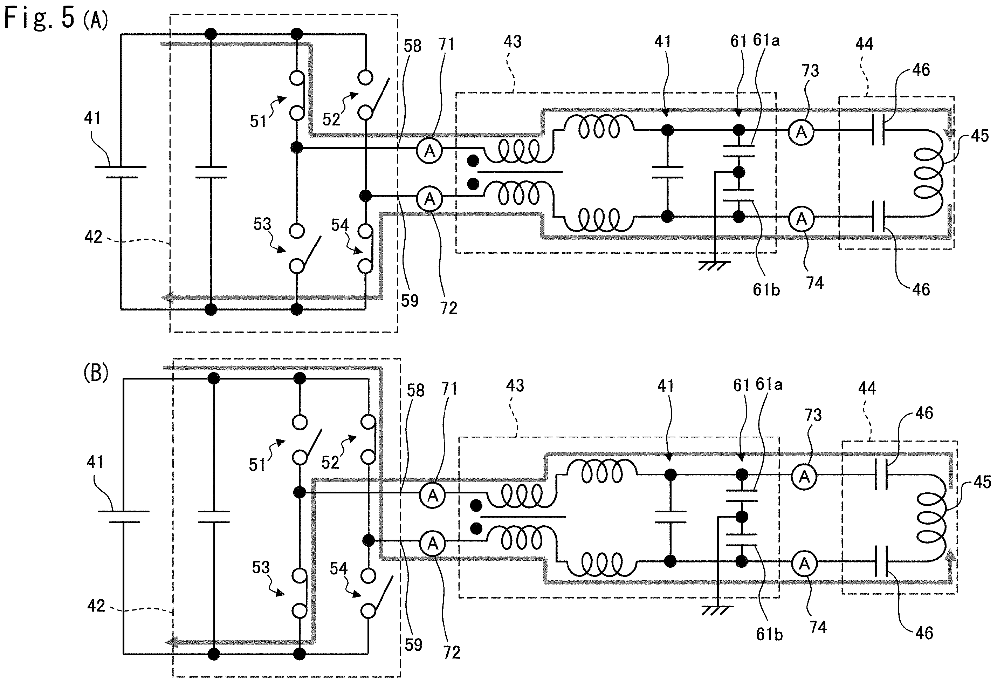

Next, operations in the power supply unit 31 and the power transmission unit 32 during power transmission will be described with reference to Fig. 5. Fig. 5is a diagram for explaining the operations in the power supply unit 31 and the power transmission unit 32 during power transmission.

During power transmission, the switching transistors 51 to 54 of the inverter circuit 42 are selectively connected, and the AC power is output from the output terminals 58 and 59 of the inverter circuit 42. Specifically, in the inverter circuit 42, the first connection state and the second connection state are intermittently and alternately repeated so that the AC power is output.

In the first connection state, as illustrated in Fig. 5(A), the first switching transistor 51 and the fourth switching transistor 54 are turned on, and the second switching transistor 52 and the third switching transistor 53 are turned off. In this case, the positive electrode line 56 is connected to the first output terminal 58, and thus connected to the first line 65. On the other hand, the negative electrode line 57 is connected to the second output terminal 59, and thus connected to the second line 66.

In the second connection state, as illustrated in Fig. 5(B), the second switching transistor 52 and the third switching transistor 53 are turned on, and the first switching transistor 51 and the fourth switching transistor 54 are turned off. In this case, the positive electrode line 56 is connected to the second output terminal 59, and thus connected to the second line 66. On the other hand, the negative electrode line 57 is connected to the first output terminal 58, and thus connected to the first line 65.

During power transmission, the first connection state and the second connection state as described above are intermittently and alternately repeated in the inverter circuit 42, whereby the AC power is output from the output terminals 58 and 59 of the inverter circuit 42. When the AC power is output from the inverter circuit 42 in this way, the AC power is supplied to the power transmission-side resonance circuit 44 via the power transmission-side filter circuit 43, and as a result, an alternating magnetic field is generated in the power transmission coil 45. That is, in the present embodiment, when transmitting the power, the controller 33 controls the power supply unit 31 including the inverter circuit 42 so that an AC voltage is applied to the power transmission coil 45.

### <Detection of electric leakage>

In the power transmission-side resonance circuit 44 including the power transmission coil 45, an unintended electric leakage may occur. When such an electric leakage occurs, the power cannot be efficiently transmitted from the ground power supply device 1 to the vehicle 5. Thus, in the present embodiment, the electric leakage in the power transmission-side resonance circuit 44 is detected.

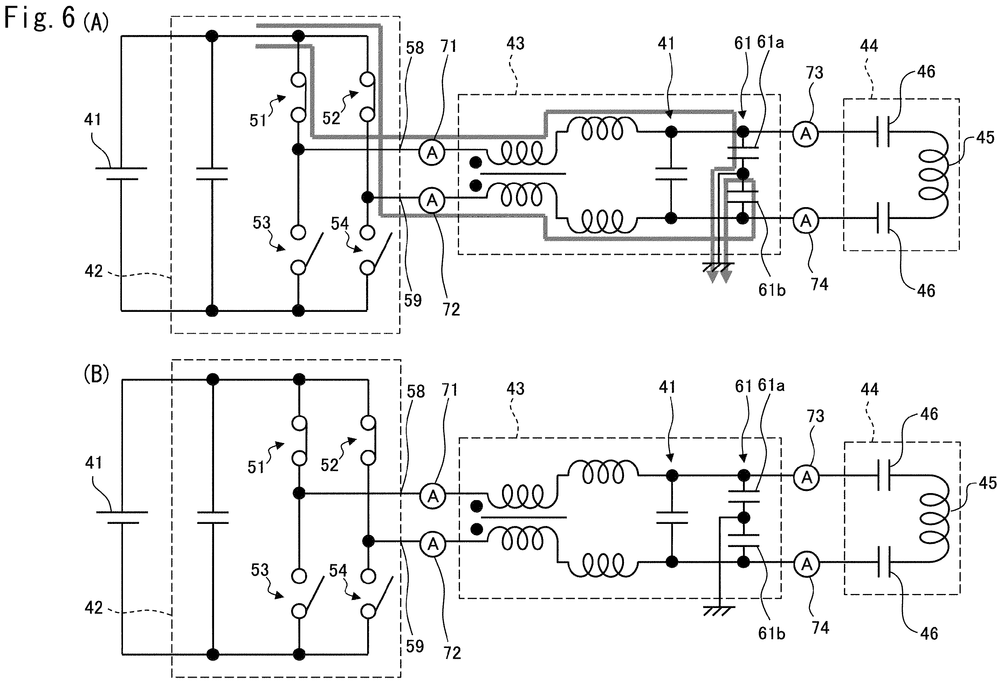

With reference to Figs. 6 to 8, detection of the electric leakage in the power transmission-side resonance circuit 44 will be described. Fig. 6 is a diagram schematically illustrating a state of an electronic circuit when no electric leakage occurs in the power transmission-side resonance circuit 44.

In the present embodiment, when the electric leakage in the power transmission-side resonance circuit 44 is detected, a controller 33 switches a first switching transistor 51 and a second switching transistor 52 from OFF to ON, and then keeps the transistors in the on state as illustrated in Fig. 6. On the other hand, the third switching transistor 53 and the fourth switching transistor 54 are maintained in the off state. As a result, the first output terminal 58 and the second output terminal 59 of the inverter circuit 42 are both connected to the positive electrode line 56 and maintained at the same potential different from the ground potential. Therefore, in the present embodiment, when the electric leakage in the power transmission-side resonance circuit 44 is detected, the power supply device is controlled by the controller 33 to maintain both the output terminals 58 and 59 of the power supply device at the same potential different from the ground potential.

When the electric leakage in the power transmission-side resonance circuit 44 is detected, the controller 33 switches the third switching transistor 53 and the fourth switching transistor 54 from OFF to ON, and then keeps the transistors in the on state, and the first switching transistor 51 and the second switching transistor 52 may be kept in the off state. However, this is limited to a case where the negative electrode line 57 has a potential different from the ground potential. When the switching transistors 51 to 54 are maintained in this manner, the first output terminal 58 and the second output terminal 59 of the inverter circuit 42 are both connected to the negative electrode line 57 and maintained at the same potential different from the ground potential.

In addition, in the present embodiment, the electric leakage in the power transmission-side resonance circuit 44 is detected based on the current detected by the ammeters 71 to 74 when both the output terminals 58 and 59 are maintained at the same potential different from the ground potential.

Here, a case will be considered in which only the first switching transistor 51 and the second switching transistor 52 are switched on and maintained from the state where all the switching transistors 51 to 54 are turned off in the state where no electric leakage occurs in the power transmission-side resonance circuit 44. Fig. 6 is a diagram schematically illustrating a current flow in the power supply unit 31 and the power transmission unit 32 in such a case. In particular, Fig. 6(A) illustrates a current flow immediately after the first switching transistor 51 and the second switching transistor 52 are switched on. On the other hand, Fig. 6(B) illustrates a current flow after a certain period of time has elapsed since the first switching transistor 51 and the second switching transistor 52 has been switched on.

As illustrated in Fig. 6(A), immediately after the first switching transistor 51 and the second switching transistor 52 are switched on, the voltages on both sides of the first capacitor 61a and the second capacitor 61b constituting the Y capacitor 61 are different from each other, and therefore, a current flows so that a charge is accumulated in the capacitors 61a and 61b. Therefore, immediately after the first switching transistor 51 and the second switching transistor 52 are switched on, as illustrated in Fig. 6(A), the current flows from the first output terminal 58 and the second output terminal 59 toward a ground-contacting location of the Y capacitor 61.

On the other hand, when a certain period of time elapses after the first switching transistor 51 and the second switching transistor 52 are switched on, a charge according to a potential difference between both ends is accumulated in the first capacitor 61a and the second capacitor 61b. As a result, after a certain period of time has elapsed, as illustrated in Fig. 6(B), a current does not flow in the power supply unit 31 and the power transmission unit 32.

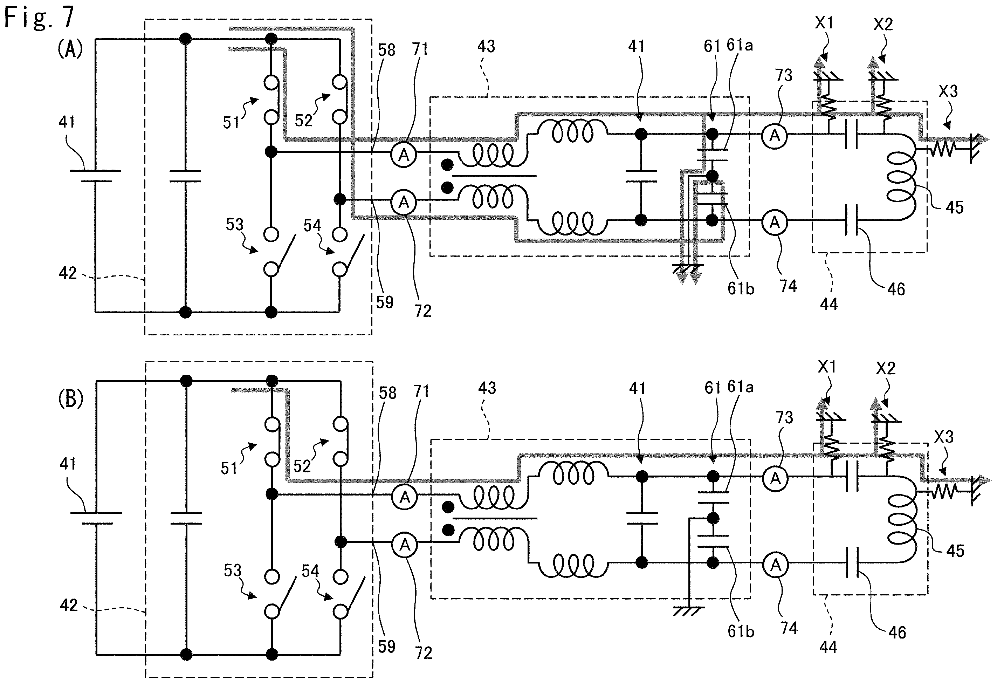

Next, with reference to Fig. 7, a case will be considered in which only the first switching transistor 51 and the second switching transistor 52 are switched on and maintained from the state where all the switching transistors 51 to 54 are turned off in a state where the electric leakage occurs in the power transmission-side resonance circuit 44. Fig. 7 is a diagram schematically illustrating a state of the electronic circuit in the case where the electric leakage occurs in the power transmission-side resonance circuit 44. In particular, in Fig. 7, locations where the electric leakage occurs are represented by X1, X2, and X3. Although Fig. 7 illustrates that the electric leakage occurs at the three locations X1, X2, and X3, a case where the electric leakage occurs at any one of the three locations will be described below.

Immediately after only the first switching transistor 51 and the second switching transistor 52 are switched on in the state where the electric leakage occurs at any one of X1, X2, and X3 in the power transmission-side resonance circuit 44, as illustrated in Fig. 7(A), a current flows so that a charge is accumulated in the first capacitor 61a and the second capacitor 61b constituting the Y capacitor 61. In addition, in this case, since the electric leakage occurs, the current also flows from the power transmission-side filter circuit 43 to the power transmission-side resonance circuit 44.

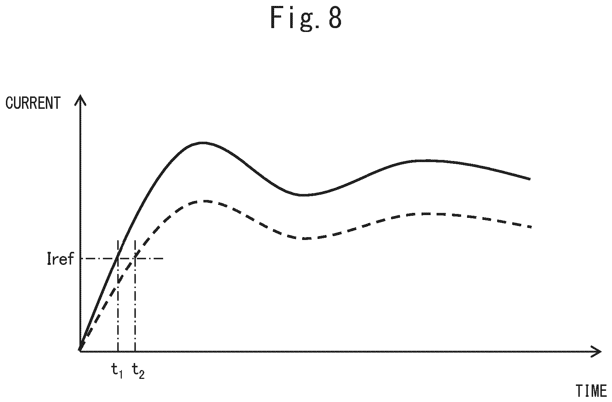

Fig. 8 is a diagram illustrating a transition of a current (that is, the current flowing through the first output terminal 58) detected by the ammeter 71 immediately after the first switching transistor 51 and the second switching transistor 52 are switched on. The broken line in the drawing represents the transition of the current in a case where no electric leakage occurs, and the solid line in the drawing represents the transition of the current in a case where the electric leakage occurs. As illustrated in Fig. 8, in the case where the electric leakage occurs, the current also flows from the power transmission-side filter circuit 43 to the power transmission-side resonance circuit 44 as compared with the case where no electric leakage occurs, so that a current rise speed becomes faster.

Thus, in the present embodiment, when the first switching transistor 51 and the second switching transistor 52 are switched on, that is, when both the output terminals 58 and 59 of the inverter circuit 42 are switched to the same potential different from the ground potential, the presence or absence of the electric leakage is detected based on the current rise speed detected by the ammeters 71 and 72. Specifically, in the present embodiment, the presence or absence of the electric leakage is detected based on whether the time taken from when the first switching transistor 51 and the second switching transistor 52 are switched on until the current detected by the first ammeter 71 or the second ammeter 72 reaches a predetermined reference current Iref is equal to or longer than a reference time. In the example illustrated in Fig. 8, a time t₂ at which the current detected by the ammeters 71 and 72 reaches the reference current Iref when no electric leakage occurs is longer than the reference time. Therefore, in this case, the controller 33 connected to the ammeters 71 and 72 determines that no electric leakage occurs. On the other hand, a time t₁ at which the current detected by the ammeters 71 and 72 reaches the reference current Iref when the electric leakage occurs is equal to or less than the reference time. Therefore, in this case, the controller 33 connected to the ammeters 71 and 72 determines that the electric leakage occurs.

In the present embodiment, the presence or absence of the electric leakage is detected based on the time taken for the current detected by the ammeters 71 and 72 to reach the reference current. However, the presence or absence of the electric leakage may be detected by another method as long as it is substantially based on whether or not the current rise speed of the current detected by the ammeters 71 and 72 is equal to or higher than a predetermined speed. Specifically, the rise speed may be calculated based on outputs of the ammeters 71 and 72, and the presence or absence of the electric leakage may be detected based on the calculated rise speed. Alternatively, the presence or absence of the electric leakage may be detected based on a current value detected by the ammeters 71 and 72 when a predetermined time has elapsed since the first switching transistor 51 and the second switching transistor 52 have been switched on.

When a certain period of time elapses after only the first switching transistor 51 and the second switching transistor 52 are switched on in the state where the electric leakage occurs at any one of X1, X2, and X3 in the power transmission-side resonance circuit 44, as illustrated in Fig. 7(B), a current does not flow through the first capacitor 61a and the second capacitor 61b constituting the Y capacitor 61. On the other hand, in this case, since the electric leakage occurs, the current flows from the power transmission-side filter circuit 43 to the power transmission-side resonance circuit 44. That is, the current detected by the third ammeter 73 or the fourth ammeter 74 becomes 0 when a certain period of time elapses from the switching of the switching transistors 51 and 52 in a case where no electric leakage occurs, whereas the current does not become 0 and is maintained at a predetermined value even when a certain period of time elapses from the switching of the switching transistors 51 and 52 in a case where the electric leakage occurs.

Thus, in the present embodiment, when a certain period of time has elapsed after the first switching transistor 51 and the second switching transistor 52 have been switched on, that is, when a certain period of time has elapsed after both the output terminals 58 and 59 of the inverter circuit 42 have been set to the same potential different from the ground potential, the presence or absence of the electric leakage is detected based on the current detected by the ammeters 73 and 74. Specifically, when the current detected by the ammeters 73 and 74 is equal to or more than a predetermined reference value (value close to 0) when a reference time has elapsed since the first switching transistor 51 and the second switching transistor 52 have been switched on, that is, when such a current is not 0, the controller 33 determines that the electric leakage occurs in the power transmission-side resonance circuit 44. On the other hand, when the current detected by the ammeters 73 and 74 is less than the predetermined reference value when the reference time has elapsed since the first switching transistor 51 and the second switching transistor 52 have been switched on, that is, when such a current is 0 (including substantially 0), the controller 33 determines that no electric leakage occurs in the power transmission-side resonance circuit 44. The reference time is a time normally taken for the current detected by the ammeters 71 to 74 to converge after both the output terminals 58 and 59 are set to the same potential different from the ground potential.

As described above, according to the present embodiment, the electric leakage is detected based on electrical characteristics of the ground power supply device 1 when the first switching transistor 51 and the second switching transistor 52 are switched on or when a certain period of time has elapsed since the switching. As a result, the electric leakage in the power transmission-side resonance circuit 44 can be detected relatively accurately.

In the present embodiment, when it is detected that the electric leakage occurs in the power transmission-side resonance circuit 44, the controller 33 may prohibit the supply of the power for the power transmission to the power transmission-side resonance circuit 44 so that the power transmission is not performed using the power transmission-side resonance circuit 44. When it is detected that electric leakage occurs in the power transmission-side resonance circuit 44, the controller 33 may notify an administrator (user) of the ground power supply device 1 that the electric leakage occurs. Specifically, the controller 33 displays that the electric leakage occurs in a display device such as a display connected to the controller 33, or outputs a voice indicating that the electric leakage occurs from a speaker connected to the controller 33.

### <Modification>

In the above embodiment, the electric leakage in the power transmission-side resonance circuit 44 is detected. However, the electric leakage in the first line 65 and the second line 66 excluding the power transmission-side filter circuit 43 and the power transmission-side resonance circuit 44 can be similarly detected by a similar method.

In the above embodiment, the power transmission-side filter circuit 43 may not be provided. However, in this case, a current as illustrated in Fig. 6(A) does not flow through the power transmission-side resonance circuit 44. Therefore, in this case, the presence or absence of the electric leakage is determined based on whether the current detected by the ammeters 71 to 74 immediately after the first switching transistor 51 and the second switching transistor 52 are switched on is equal to or larger than a reference value close to 0. In addition, in this case, the presence or absence of the electric leakage is not detected based on the current rise speed immediately after the first switching transistor 51 and the second switching transistor 52 are switched on.

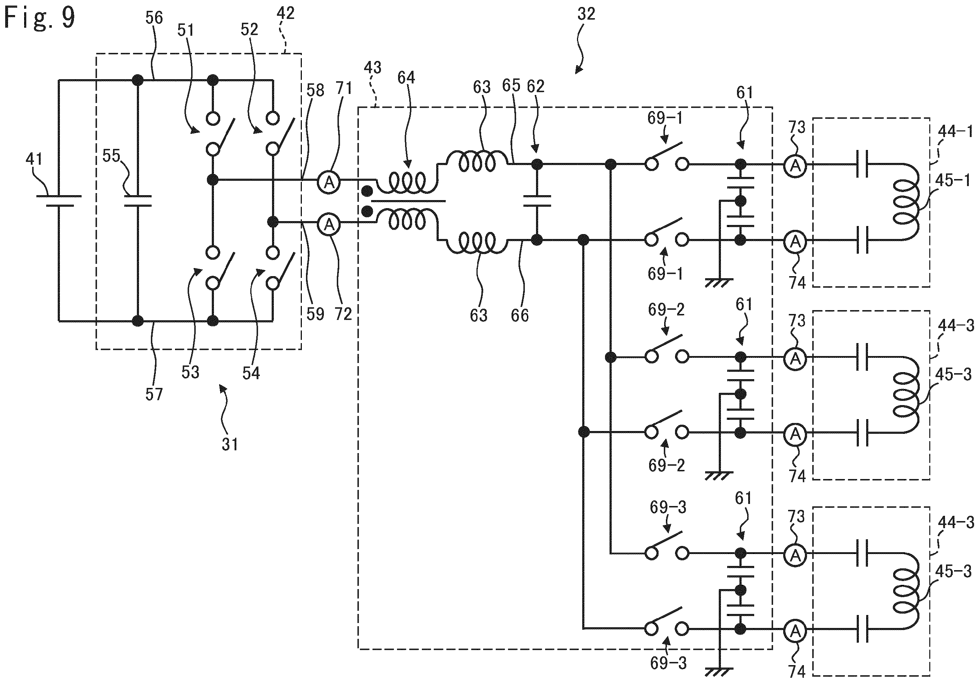

In the above embodiment, one power transmission-side resonance circuit 44 is connected to one inverter circuit 42. However, as illustrated in Fig. 9, a plurality of the power transmission-side resonance circuits 44 may be connected to one inverter circuit 42. Fig. 9 is a diagram similar to Fig. 2, schematically illustrating a configuration of an electronic circuit in the power supply unit 31 and the power transmission unit 32 in a case where the plurality of power transmission-side resonance circuits 44 are connected to one inverter circuit 42.

In the example illustrated in Fig. 9, three power transmission-side resonance circuits 44, that is, a first power transmission-side resonance circuit 44-1 to a third power transmission-side resonance circuit 44-3, are connected to one inverter circuit 42. The power transmission-side filter circuit 43 is disposed between the inverter circuit 42 and each of the power transmission-side resonance circuits 44. In addition, a changeover switch 69 (in the example illustrated in Fig. 9, a first changeover switch 69-1 to a third changeover switch 69-3) is provided between the inverter circuit 42 and each of the power transmission-side resonance circuits 44. In the changeover switch 69, when the power is transmitted to the vehicle 5, the changeover switch 69 corresponding to the power transmission-side resonance circuit 44 on which the vehicle 5 is located is turned on, and the changeover switch 69 corresponding to the other power transmission-side resonance circuits 44 is turned off.

On the other hand, when the electric leakage in the power transmission-side resonance circuit 44 is detected, the power transmission-side resonance circuits 44 are connected to the inverter circuit 42 one by one by the changeover switch 69, and the electric leakage in each of the connected power transmission-side resonance circuits 44 is detected. That is, in a state where one changeover switch 69 is turned on and the remaining changeover switches 69 are turned off, both the first output terminal 58 and the second output terminal 59 of the inverter circuit 42 are connected to the positive electrode line 56, and are maintained at the same potential different from the ground potential. When it is determined that the electric leakage occurs in the state where one changeover switch 69 (changeover switch 69 corresponding to one power transmission-side resonance circuit 44) is turned on and the remaining changeover switches 69 are turned off (that is, a state where only one power transmission-side resonance circuit 44 is connected to inverter circuit 42), and it is not determined that the electric leakage occurs in the state where the other changeover switches are each turned on and the remaining changeover switches are turned off (that is, a state where the other power transmission-side resonance circuit 44 other than the one power transmission-side resonance circuit 44 is connected to the inverter circuit 42), it is determined that the electric leakage occurs in one power transmission-side resonance circuit 44 connected to the one changeover switch 69.

On the other hand, when all the changeover switches 69 are turned on one by one and the remaining changeover switches 69 are turned off (that is, a state where all the power transmission-side resonance circuits 44 are connected to the inverter circuit 42 one by one), in a case where it is determined that the electric leakage occurs in all the changeover switches, it is determined that the electric leakage occurs in a circuit (for example, a part of the power transmission-side filter circuit 43) on the inverter circuit 42 side with respect to the changeover switch 69. In addition, even when the electric leakage is detected in a state where all the changeover switches 69 are turned off, it is determined that the electric leakage occurs in the circuit (for example, a part of the power transmission-side filter circuit 43) on the inverter circuit 42 side with respect to the changeover switch 69.

### Second Embodiment

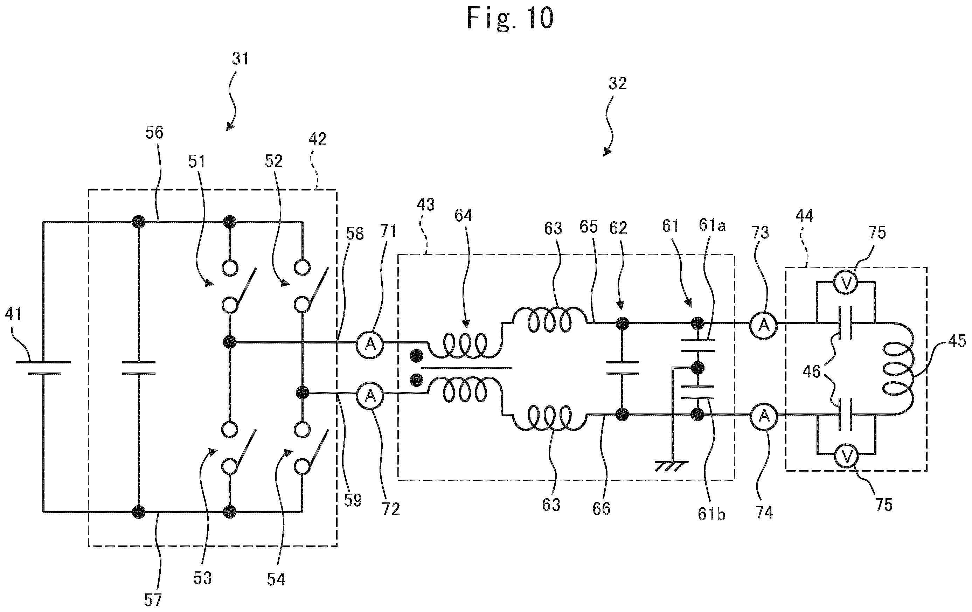

Next, a ground power supply device 1 according to a second embodiment will be described with reference to Fig. 10. The configuration of the ground power supply device 1 according to the second embodiment is basically similar to the configuration of the ground power supply device 1 according to the first embodiment. Hereinafter, differences from the ground power supply device 1 according to the first embodiment will be mainly described.

Fig. 10 is a diagram similar to Fig. 2, schematically illustrating a configuration of an electronic circuit in the power supply unit 31 and a power transmission unit 32 according to the second embodiment. As illustrated in Fig. 10, the power transmission unit 32 according to the present embodiment includes a voltmeter 75 connected in parallel with a power transmission-side resonance capacitor 46. The voltmeter 75 detects a voltage between both ends of the power transmission-side resonance capacitor 46.

Here, in the ground power supply device 1 configured as described above, in a case where no electric leakage occurs in a power transmission-side resonance circuit 44, when a first switching transistor 51 and a second switching transistor 52 are kept in the on state, that is, when both output terminals 58 and 59 are maintained at the same potential different from the ground potential, the potentials at both ends of the power transmission-side resonance capacitor 46 become equal. Therefore, in this case, the voltage detected by the voltmeter 75 is substantially 0.

On the other hand, when the electric leakage occurs in the power transmission-side resonance circuit 44, the potentials at both ends of the power transmission-side resonance capacitor 46 are different even if the first switching transistor 51 and the second switching transistor 52 are kept in the on state. Therefore, in this case, the voltage detected by the voltmeter 75 does not become 0 but is maintained at a predetermined value different from 0.

Thus, in the present embodiment, when a certain period of time has elapsed after the first switching transistor 51 and the second switching transistor 52 have been switched on, that is, when a certain period of time has elapsed after both the output terminals 58 and 59 of an inverter circuit 42 have been set to the same potential different from the ground potential, the presence or absence of the electric leakage is detected based on the voltage detected by the voltmeter 75. Specifically, when the voltage detected by the voltmeter 75 is equal to or more than a predetermined reference value (value close to 0) when a reference time has elapsed since the first switching transistor 51 and the second switching transistor 52 have been switched on, that is, when such a voltage is not 0 (including substantially 0), the controller 33 determines that the electric leakage occurs in the power transmission-side resonance circuit 44. On the other hand, when the voltage detected by the voltmeter 75 is less than the predetermined reference value when the reference time has elapsed since the first switching transistor 51 and the second switching transistor 52 have been switched on, that is, when such a voltage is 0 (including substantially 0), the controller 33 determines that no electric leakage occurs in the power transmission-side resonance circuit 44.

As described above, also in the present embodiment, the electric leakage is detected based on the electrical characteristics of the ground power supply device 1 when the first switching transistor 51 and the second switching transistor 52 are switched on. As a result, the electric leakage in the power transmission-side resonance circuit 44 can be detected relatively accurately.

Also in the second embodiment, the electric leakage in the power transmission-side resonance circuit 44 may be detected based on not only the voltmeter 75 but also the ammeters 71 to 74 according to the first embodiment. By detecting the electric leakage by a plurality of methods as described above, the electric leakage can be detected with high accuracy.

### Third Embodiment

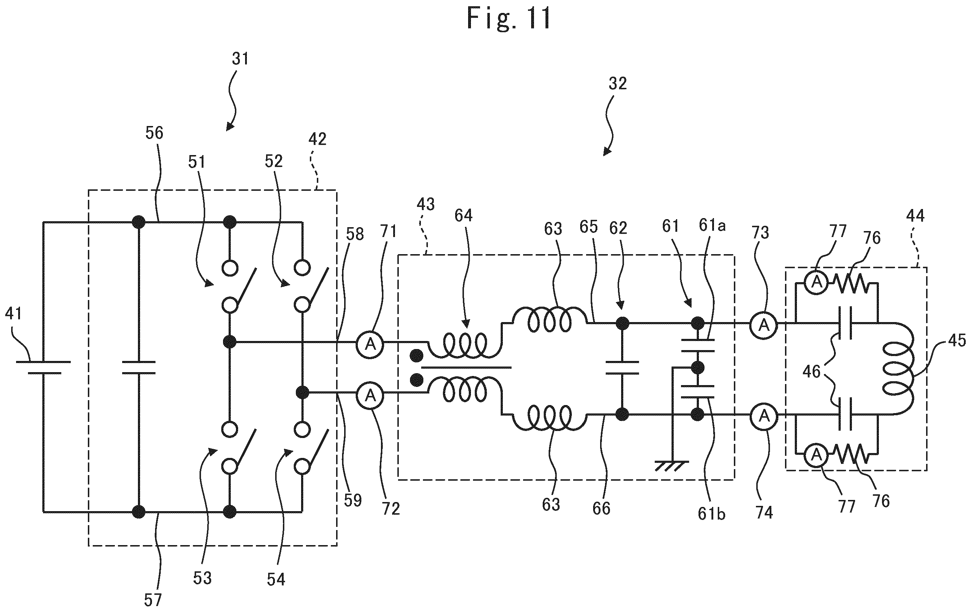

Next, a ground power supply device 1 according to a third embodiment will be described with reference to Fig. 11. The configuration of the ground power supply device 1 according to the third embodiment is basically similar to the configuration of the ground power supply device 1 according to the first and second embodiments. Hereinafter, differences from the ground power supply device 1 according to the first and second embodiments will be mainly described.

Fig. 11 is a diagram similar to Fig. 2, schematically illustrating a configuration of an electronic circuit in the power supply unit 31 and a power transmission unit 32 according to the third embodiment. As illustrated in Fig. 11, the power transmission unit 32 according to the present embodiment includes an electric resistor 76 and a fifth ammeter 77 connected in parallel with a power transmission-side resonance capacitor 46. The fifth ammeter 77 is connected in series to the electric resistor 76 and detects a current flowing through the electric resistor 76. The electric resistor 76 has a relatively large resistance value so that a large current does not flow.

Here, in the ground power supply device 1 configured as described above, in a case where no electric leakage occurs in a power transmission-side resonance circuit 44, when a first switching transistor 51 and a second switching transistor 52 are kept in the on state, that is, when both output terminals 58 and 59 are maintained at the same potential different from the ground potential, the potentials at both ends of the power transmission-side resonance capacitor 46 become equal. Therefore, in this case, no current flows through the electric resistor 76 connected in parallel with the power transmission-side resonance capacitor 46, and thus, the current detected by the fifth ammeter 77 becomes substantially 0.

On the other hand, when the electric leakage occurs in the power transmission-side resonance circuit 44, the potentials at both ends of the power transmission-side resonance capacitor 46 are different even if the first switching transistor 51 and the second switching transistor 52 are kept in the on state. Therefore, in this case, the current flows through the electric resistor 76 connected in parallel with the power transmission-side resonance capacitor 46, and thus, the current detected by the fifth ammeter 77 does not become 0 but is maintained at a predetermined value different from 0.

Thus, in the present embodiment, when a certain period of time has elapsed after the first switching transistor 51 and the second switching transistor 52 have been switched on, that is, when a certain period of time has elapsed after both the output terminals 58 and 59 of an inverter circuit 42 have been set to the same potential different from the ground potential, the presence or absence of the electric leakage is detected based on the current detected by the fifth ammeter 77. Specifically, when the current detected by the fifth ammeter 77 is equal to or more than a predetermined reference value (value close to 0) when a reference time has elapsed since the first switching transistor 51 and the second switching transistor 52 have been switched on, that is, when such a current is not 0 (including substantially 0), the controller 33 determines that the electric leakage occurs in the power transmission-side resonance circuit 44. On the other hand, when the current detected by the fifth ammeter 77 is less than the predetermined reference value when the reference time has elapsed since the first switching transistor 51 and the second switching transistor 52 have been switched on, that is, when such a current is 0 (including substantially 0), the controller 33 determines that no electric leakage occurs in the power transmission-side resonance circuit 44.

As described above, also in the present embodiment, the electric leakage is detected based on the electrical characteristics of the ground power supply device 1 when the first switching transistor 51 and the second switching transistor 52 are switched on. As a result, the electric leakage in the power transmission-side resonance circuit 44 can be detected relatively accurately.

Also in the third embodiment, the electric leakage in the power transmission-side resonance circuit 44 may be detected based on not only the fifth ammeter 77 but also the ammeters 71 to 74 in the first embodiment or the voltmeter 75 according to the second embodiment. By detecting the electric leakage by a plurality of methods as described above, the electric leakage can be detected with high accuracy.

### Fourth Embodiment

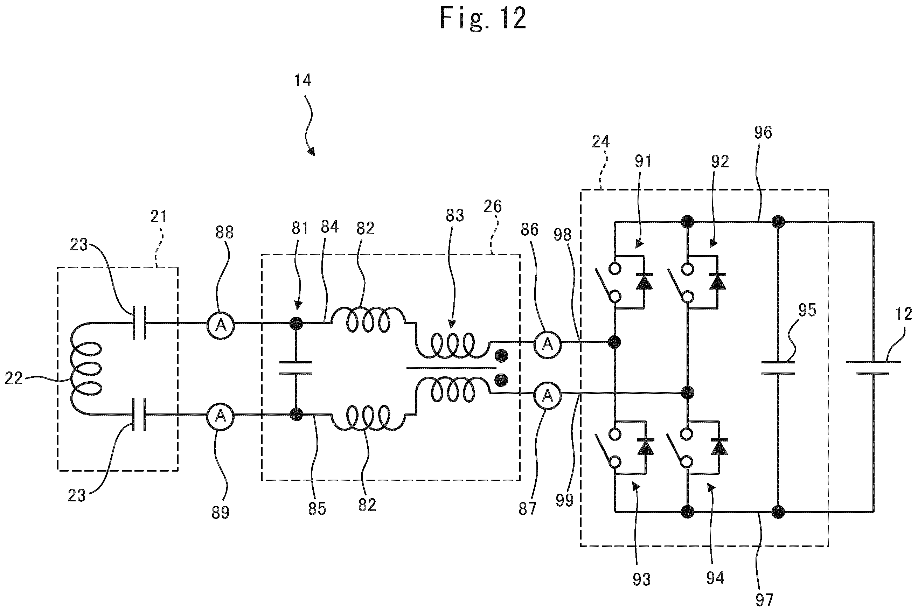

Next, a vehicle 5 according to a fourth embodiment will be described with reference to Figs. 12 to 15. The configuration of the vehicle 5 according to the fourth embodiment is basically similar to the configuration of the vehicle 5 according to the first to fourth embodiments. Hereinafter, differences from the vehicle 5 according to the first to fourth embodiments will be mainly described.

Fig. 12 is a diagram schematically illustrating a configuration of an electronic circuit in a power reception unit 14. As described above, the power reception unit 14 includes a power reception-side resonance circuit 21 and a power reception-side rectifier circuit 24. In addition, the power reception unit 14 includes a power reception-side filter circuit 26 disposed between the power reception-side resonance circuit 21 and the power reception-side rectifier circuit 24. In Fig. 12, a circuit configuration of a charging circuit 25 is omitted. The power reception unit 14 may not include the power reception-side filter circuit 26.

In the present embodiment, as illustrated in Fig. 12, the power reception-side rectifier circuit 24 includes four switching transistors 91 to 94 each having a diode connected in parallel, and a smoothing capacitor 95. As the switching transistors 91 to 94, for example, a field effect transistor capable of reverse conduction such as a MOSFET is used. The four switching transistors 91 to 94 constitute an H-bridge circuit similarly to the first embodiment. Also in the present embodiment, the first switching transistor 91 is provided between a positive electrode line 96 connected to a positive electrode of a battery 12 and a first input terminal 98 (functions as a first output terminal when the power is supplied from the battery 12 to the power reception-side resonance circuit 21). Similarly, the second switching transistor 92 is provided between the positive electrode line 96 and a second input terminal 99 (functions as a second output terminal when the power is supplied from the battery 12 to the power reception-side resonance circuit 21). The third switching transistor 93 is provided between a negative electrode line 97 connected to a negative electrode of the battery 12 and the first input terminal 98, and the fourth switching transistor 94 is provided between the negative electrode line 97 and the second input terminal 99. These switching transistors 91 to 94 are connected to the ECU 15, and ON/OFF thereof is controlled by the ECU 15.

The power reception-side filter circuit 26 removes noise generated in the power reception unit 14, particularly the normal mode noise and the common mode noise. In the present embodiment, the power reception-side filter circuit 26 is disposed between the power reception-side resonance circuit 21 and the power reception-side rectifier circuit 24. As illustrated in Fig. 12, the power reception-side filter circuit 26 includes various filter elements for reducing noise. Specifically, in the present embodiment, the power reception-side filter circuit 26 includes an X capacitor 81, a normal mode choke coil 82, and a common mode choke coil 83. The power reception-side filter circuit 26 only needs to include some of the plurality of filter elements. Furthermore, the power reception-side filter circuit 26 may include other filter elements such as a Y capacitor, a fourth order filter, and a band pass filter.

As described above, the power reception-side resonance circuit 21 includes the power reception coil 22 and the power reception-side resonance capacitor 23. One end of the power reception coil 22 is connected to a first line 84 connected to the first input terminal 98 of the power reception-side rectifier circuit 24, and the other end is connected to a second line 85 connected to the second input terminal 99 of the power reception-side rectifier circuit 24. In the present embodiment, the two power reception-side resonance capacitors 23 are connected in series to the first line 84 and the second line 85, respectively. The power reception-side resonance capacitor 23 may be provided in any form as long as it constitutes a resonator together with the power reception coil 22.

In the present embodiment, a plurality of ammeters 86 to 89 are provided in the power reception unit 14. Specifically, the first ammeter 86 is provided in the first line 84 close to the first input terminal 98 of the power reception-side rectifier circuit 24. The second ammeter 87 is provided in the second line 85 close to the second input terminal 99 of the power reception-side rectifier circuit 24. The third ammeter 88 is provided in the first line 84 between the power reception-side filter circuit 26 and the power reception-side resonance circuit 21. The fourth ammeter 89 is provided in the second line 85 between the power reception-side filter circuit 26 and the power reception-side resonance circuit 21. These ammeters may be arranged at locations other than the location described above as long as the ammeter can detect the current flowing through the power reception coil 22, the current flowing through the power reception-side resonance capacitor 23, or the current flowing from the power reception-side filter circuit 26 to the power reception coil 22.

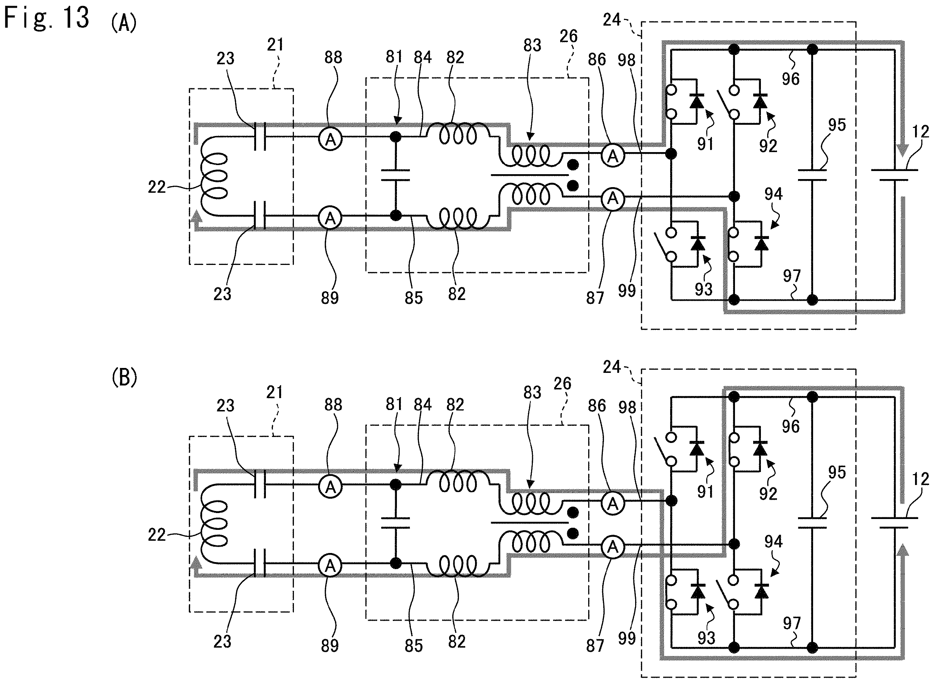

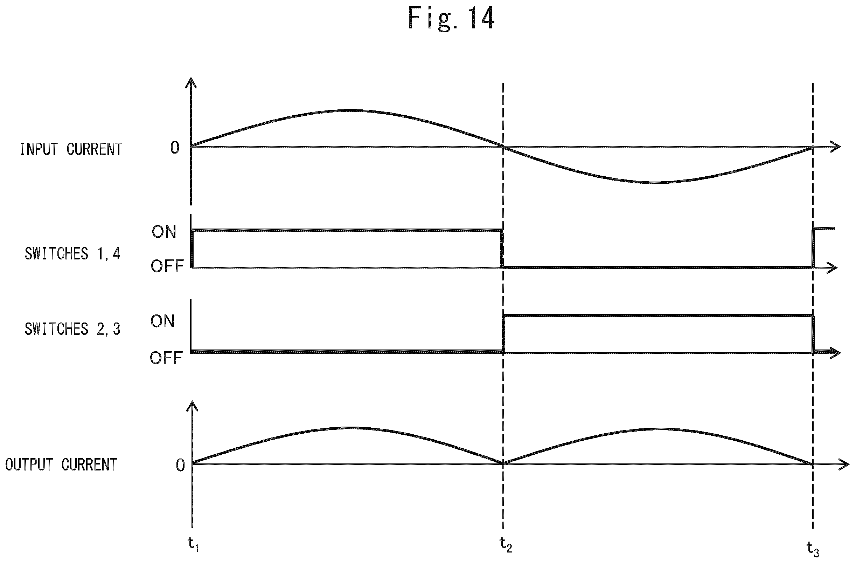

Next, with reference to Figs. 13 and 14, operation at the time of power reception in the power reception unit 14 of the vehicle 5 configured as described above will be described. Fig. 13 is a diagram for explaining an operation of the power reception unit 14 at the time of power reception.

At the time of power reception, the switching transistors 91 to 94 of the power reception-side rectifier circuit 24 are selectively connected, and an AC power supplied to the power reception-side rectifier circuit 24 is converted into a DC power. Specifically, in the power reception-side rectifier circuit 24, a first connection state and a second connection state are alternately switched so that the DC power is output.

In the connection state of Fig. 1, as illustrated in Fig. 13(A), the first switching transistor 91 and the fourth switching transistor 94 are turned on, and the second switching transistor 92 and the third switching transistor 93 are turned off. In this case, the positive electrode line 96 is connected to the first input terminal 98, and thus connected to the first line 84. On the other hand, the negative electrode line 97 is connected to the second input terminal 99, and thus connected to the second line 85.

In the second connection state, as illustrated in Fig. 13(B), the second switching transistor 92 and the third switching transistor 93 are turned on, and the first switching transistor 91 and the fourth switching transistor 94 are turned off. In this case, the positive electrode line 96 is connected to the second input terminal 99, and thus connected to the second line 85. On the other hand, the negative electrode line 97 is connected to the first input terminal 98, and thus connected to the first line 84.

Fig. 14 is a time chart of an input current to the power reception-side rectifier circuit 24, a state of the switching transistors 91 to 94, and an output current from the power reception-side rectifier circuit 24. As illustrated in Fig. 14, at the time of power reception, in the power reception-side rectifier circuit 24, the first connection state and the second connection state are alternately switched according to a direction of the AC current generated in the power reception coil 22. Specifically, when the direction of the input current is one direction (times t₁ to t₂), the power reception-side rectifier circuit 24 is set to the first connection state. On the other hand, when the direction of the input current is a direction opposite to the one direction (times t₂ to t₃), the power reception-side rectifier circuit 24 is set to the second connection state. As a result, as illustrated in Fig. 14, the output current from the power reception-side rectifier circuit 24 becomes a DC current. Thus, the DC power is supplied to the battery 12. Therefore, in the present embodiment, the power reception-side rectifier circuit 24 is controlled to rectify the AC power received by the power reception coil 22 into the DC power and then charge the battery 12 with the power.

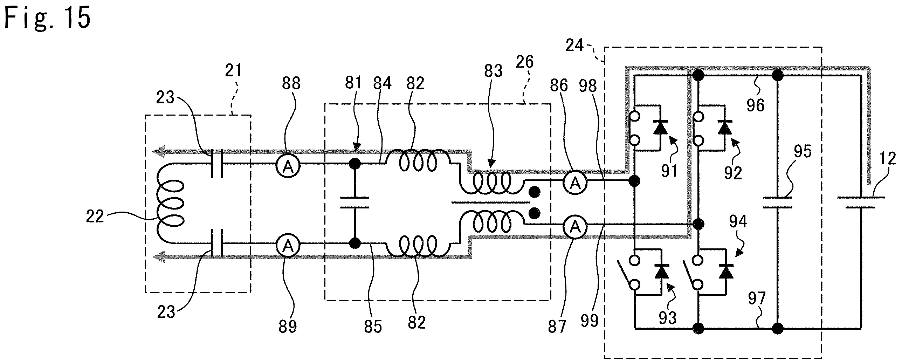

Fig. 15 describes detection of the electric leakage in the power reception-side resonance circuit 21. Fig. 15 is a diagram for explaining an operation of the power reception unit 14 when the electric leakage in the power reception-side resonance circuit 21 is detected. As illustrated in Fig. 15, when the electric leakage in the power reception-side resonance circuit 21 is detected, the power of the battery 12 is used when the vehicle 5 is not located on a power transmission coil 45. Therefore, the battery 12 and the power reception-side rectifier circuit 24 function as a power supply device capable of supplying the power to the power reception coil 22. Therefore, in the present embodiment, the power supply device is charged by the power received by the power reception coil 22.

Specifically, when the electric leakage in the power reception-side resonance circuit 21 is detected, as illustrated in Fig. 15, when the vehicle 5 is not located on the power transmission coil 45, the first switching transistor 91 and the second switching transistor 92 are turned on, and the third switching transistor 93 and the fourth switching transistor 94 are turned off. Therefore, when the electric leakage in the power reception-side resonance circuit 21 is detected, similarly to the first embodiment, the switching transistors 91 to 94 of the power reception-side rectifier circuit 24 are controlled such that both the input terminals 98 and 99 (both output terminals of the power supply device) of the power reception-side rectifier circuit 24 are maintained at the same potential different from the ground potential.

As in the first embodiment, when a certain period of time has elapsed after the first switching transistor 91 and the second switching transistor 92 have been switched on, the presence or absence of the electric leakage in the power reception-side resonance circuit 21 is determined based on the current detected by the ammeters 88 and 89. In addition, when a Y capacitor is included in the power reception-side filter circuit 26, as in the first embodiment, the presence or absence of the electric leakage in the power reception-side resonance circuit 21 may be determined based on the current rise speed and the like detected by the ammeters 88 and 89 when the first switching transistor 91 and the second switching transistor 92 are switched on. This makes it possible to detect the electric leakage in the vehicle 5, particularly the electric leakage in the power reception-side resonance circuit 21 or the power reception unit 14 of the vehicle 5.

In the present embodiment, when it is detected that the electric leakage occurs in the power reception-side resonance circuit 21, the ECU 15 may prohibit the use of the power reception-side resonance circuit 21 so that the power reception is not performed using the power reception-side resonance circuit 21 of the vehicle 5. Moreover, the ECU 15 may be configured not to transmit a power transmission request to the ground power supply device 1 when it is detected that the electric leakage occurs in the power reception-side resonance circuit 21. In addition, in a case where the vehicle 5 is configured to be autonomously drivable, the ECU 15 may allow the vehicle 5 to drive so that the vehicle 5 does not travel in a lane in which the power transmission coil 45 is embedded when it is detected that the electric leakage occurs in the power reception-side resonance circuit 21. When it is detected that the electric leakage occurs in the power reception-side resonance circuit 21, the ECU 15 may notify a user of the vehicle 5 that the electric leakage occurs. Specifically, the ECU 15 displays that the electric leakage occurs in a display device such as a display connected to the ECU 15, or outputs a voice indicating that the electric leakage occurs from a speaker connected to the ECU 15.

In the above embodiment, the electric leakage is detected in the power reception-side resonance circuit 21 when the vehicle 5 is not located on the power transmission coil 45. However, the electric leakage in the power reception-side resonance circuit 21 may be detected after the power supply of the vehicle 5 is turned on and before the traveling of the vehicle 5 is started (before the motor 11 operates). Specifically, the electric leakage in the power reception-side resonance circuit 21 is detected, for example, when doors of the vehicle 5 are unlocked by a smart key, or when the user gets in the vehicle 5 and presses a start/stop button. Alternatively, the electric leakage in the power reception-side resonance circuit 21 may be detected after the power supply of the vehicle 5 is turned off. Specifically, the electric leakage in the power reception-side resonance circuit 21 is detected, for example, when the user presses the start/stop button before getting off the vehicle 5.

Although the preferred embodiments according to the present disclosure have been described above, the present disclosure is not limited to these embodiments, and various modifications and changes can be made within the scope of the claims.

## Claims

1. A power transmission device comprising:
a coil that performs power transmission or power reception in a wireless manner;
a power supply device that is connected to the coil and applies a voltage to the coil; and
a control device that controls the power supply device,
wherein when detecting an electric leakage of the power transmission device, the control device controls the power supply device to maintain both output terminals of the power supply device at the same potential different from a ground potential, and detects the electric leakage based on electrical characteristics of the power transmission device at this time.

2. The power transmission device according to claim 1, wherein the electrical characteristics include a current flowing through the output terminal of the power supply device.

3. The power transmission device according to claim 1, further comprising a filter circuit provided between the coil and the power supply device, wherein the electrical characteristics include a current flowing between the filter circuit and the coil.

4. The power transmission device according to claim 2 or 3, wherein the control device determines that the electric leakage occurs in the power transmission device when it is detected that the current is not 0 while controlling the power supply device to maintain both the output terminals of the power supply device at the same potential different from the ground potential.

5. The power transmission device according to any one of claims 1 to 4, further comprising a filter circuit provided between the coil and the power supply device,
wherein the filter circuit includes a plurality of capacitors,
in one of the capacitors, while one end of the capacitor is connected to one end of the coil, the other end is grounded, and in the other one of the capacitors, while one end of the capacitor is connected to the other end of the coil, the other end is grounded, and
the control device detects the electric leakage based on a rise speed of the current flowing through the output terminal of the power supply device when both the output terminals are set to the same potential different from the ground potential.

6. The power transmission device according to any one of claims 1 to 5, further comprising a resonance capacitor connected in series to the coil,
wherein the electrical characteristics include the voltage between both ends of the resonance capacitor.

7. The power transmission device according to claim 6, wherein the control device determines that the electric leakage occurs in the power transmission device when it is detected that the voltage between both ends of the resonance capacitor is not 0 while controlling the power supply device to maintain both the output terminals of the power supply device at the same potential different from the ground potential.

8. The power transmission device according to any one of claims 1 to 7, further comprising:
a resonance capacitor connected in series to the coil; and
an electric resistor connected in parallel to the resonance capacitor,
wherein the electrical characteristics include a current flowing through the electric resistor.

9. The power transmission device according to claim 8, wherein the control device determines that the electric leakage occurs in the power transmission device when it is detected that the current flowing through the electric resistor is not 0 while controlling the power supply device to maintain both the output terminals of the power supply device at the same potential different from the ground potential.

10. The power transmission device according to any one of claims 1 to 9, wherein when it is determined that the electric leakage occurs in the power transmission device, the control device notifies a user that the electric leakage occurs.

11. The power transmission device according to any one of claims 1 to 10, wherein
the coil is a power transmission coil that performs power transmission in a wireless manner, and
the control device controls the power supply device to supply an AC power to the power transmission coil when causing the power transmission coil to perform power transmission in a wireless manner.

12. The power transmission device according to claim 11, wherein the control device prohibits the supply of the power to the power transmission coil when it is determined that the electric leakage occurs in association with the power transmission coil constituting the power transmission device.

13. The power transmission device according to claim 11 or 12, comprising a plurality of the power transmission coils, wherein
the plurality of power transmission coils are each connected to one power supply device via a changeover switch, and
when the control device detects the electric leakage of the power transmission device, the control device controls the power supply device to maintain both the output terminals of the power supply device at the same potential different from the ground potential in a state where one changeover switch is turned on and a remaining changeover switch is turned off, and detects the electric leakage based on the electrical characteristics of the power transmission device at this time.

14. The power transmission device according to any one of claims 11 to 13, wherein when it is determined that the electric leakage occurs only in a state where one changeover switch is turned on and a remaining changeover switch is turned off, and it is not determined that the electric leakage occurs in a state where other changeover switches are each turned on and a remaining changeover switch is turned off, the control device determines that the electric leakage occurs in a resonance circuit including the power transmission coil connected to the one changeover switch.

15. The power transmission device according to any one of claims 1 to 10, wherein
the coil is a power reception coil that performs power reception in a wireless manner,
the power supply device is configured to be charged with a power received by the power reception coil, and
when the control device causes the power reception coil to perform power reception in a wireless manner, the control device controls the power supply device to perform power charging after rectifying an AC power received into a DC power.
